# DEMANDE DE BREVET EUROPEEN

(11) **EP 2 400 723 A1**
(43) Date de publication de la demande: **28.12.2011**
(21) Numéro de dépôt: 10305672.7
(22) Date de dépôt: 23.06.2010
(51) Int. Cl.: H04L 29/08, H04L 29/06, H04L 12/28, H04M 1/725, H04W 88/06, H04L 12/56

(54) **Procédé de gestion des transferts de données par une interface de type bluetooth**

(71) Demandeur: Gemalto SA, 92190 Meudon (FR)
(72) Inventeur: Aussel, Jean-Daniel, 92197, MEUDON CEDEX (FR); Beziat, Michel, 92197, MEUDON CEDEX (FR)

(57) **Abrégé**

Les modes de réalisation de la présente invention décrivent un procédé de gestion des transferts de données entre un périphérique comprenant une interface de type Bluetooth et un équipement informatique comprenant une interface de type Bluetooth configurée pour gérer des profils Bluetooth permettant des transferts de données de type audio caractérisé en ce que l'échange de données numériques de type non-audio entre le périphérique et l'équipement informatique est réalisé par encodage des données numériques en format audio et par transmission de ces données numériques par l'intermédiaire du canal audio de l'interface Bluetooth.

## Description

La présente invention concerne le domaine des télécommunications de type Bluetooth® et en particulier la gestion des transferts de données entre des interfaces de type Bluetooth® en fonction des profils Bluetooth® associés à ces interfaces.

Bluetooth® est un standard correspondant à des communications radio courte distance dans la bande de fréquence 2,402-2,480 GHz découpée en 79 canaux et permettant la communication entre une interface maître et une interface esclave.

Il existe une multitude de profils Bluetooth® correspondant à des spécifications fonctionnelles d'un usage particulier, comme par exemple des échanges de fichiers, des échanges audio ou des échanges vidéo.

Ainsi, en fonction des profils dont il est doté, un équipement aura différentes possibilités d'échanges par l'intermédiaire de son interface Bluetooth®. Ces profils permettent de simplifier les procédures de recherche, connexion et sécurité entre interfaces Bluetooth® et améliorent l'interopérabilité mais entraînent aussi des limitations lorsque les constructeurs limitent le nombre de ces profils sur les équipements. Ainsi, les téléphones portables par exemple comprennent souvent un profil Bluetooth® permettant un échange audio (pour communiquer avec une oreillette ou des haut-parleurs par exemple) mais n'ont pas forcément de profils permettant d'échanger des données d'un autre type avec d'autres équipements, comme par exemple un lecteur de carte à puces.

La nécessité est donc de proposer un procédé de communication par l'intermédiaire d'une interface Bluetooth® entre un premier équipement et un deuxième équipement permettant la transmission de données dont le type n'est pas géré par le profil Bluetooth® d'au moins l'un des deux équipements.

Ainsi, la présente invention concerne un procédé de gestion des transferts de données entre un périphérique comprenant une interface de type Bluetooth et un équipement informatique comprenant une interface de type Bluetooth configurée pour gérer des profils Bluetooth permettant des transferts de données de type audio caractérisé en ce que l'échange de données numériques de type non-audio entre le périphérique et l'équipement informatique est réalisé par encodage des données numériques en format audio et par transmission de ces données numériques par l'intermédiaire du canal audio de l'interface Bluetooth.

Selon un autre aspect de la présente invention, les bits du signal correspondant à des données de type audio sont transmis sur au moins une première bande de fréquence et les bits du signal correspondant à des données de type non-audio sont transmis sur au moins une deuxième bande de fréquence.

Selon un aspect supplémentaire de la présente invention, les signaux transmis sur au moins une première bande de fréquence sont transmis avec une première amplitude et les signaux transmis sur au moins une deuxième bande de fréquence sont transmis avec une deuxième amplitude.

Selon un autre aspect de la présente invention, les profils Bluetooth permettant des transferts de type audio comprennent:
- le profil Hands Free (HFP),
- le profil Headset (HSP),
- le profil Advanced Audio Distribution (A2DP).

Selon un mode de réalisation de la présente invention, le périphérique est un lecteur de cartes à puces.

La présente invention concerne également un équipement informatique comprenant une interface de type Bluetooth configurée pour gérer des profils Bluetooth permettant des transferts de données de type audio dans lequel ledit équipement informatique comprend des moyens d'encodage et de décodage des données de type non-audio selon un format audio afin de permettre la transmission desdites données de type non-audio sur un canal audio.

La présente invention concerne également un périphérique comprenant une interface de type Bluetooth configurée pour gérer des profils Bluetooth permettant des transferts de données de type audio et non-audio dans lequel ledit périphérique comprend des moyens d'encodage et de décodage des données de type non-audio sur un canal audio de manière à permettre des échanges de données non-audio avec un équipement informatique possédant une interface de type Bluetooth configurée pour gérer des profils Bluetooth permettant des transferts de données de type audio uniquement.

Selon un autre aspect de la présente invention, le périphérique comprend des premiers moyens d'encodage et de décodage permettant d'échanger des données de type audio sur un canal audio selon un premier type d'encodage et des deuxième moyens d'encodage et de décodage permettant d'échanger des données de type non-audio sur ledit canal audio selon un deuxième type d'encodage.

Selon un aspect additionnel de la présente invention, le périphérique comprend des moyens de traitement permettant d'assurer la transmission des données entre un premier équipement informatique comprenant une interface de type Bluetooth configurée pour gérer des profils Bluetooth permettant des transferts de données de type audio et non-audio et un deuxième équipement informatique comprenant une interface de type Bluetooth configurée pour gérer des profils Bluetooth permettant des transferts de données de type audio uniquement, les données reçues dudit premier équipement informatique sur un canal non-audio étant encodées en format audio afin d'être transmise sur un canal audio vers ledit deuxième équipement informatique d'une part et les données de type non-audio encodées au format audio reçues dudit deuxième équipement informatique sur un canal audio étant encodées en format non-audio afin d'être transmise sur un canal non-audio vers ledit premier équipement informatique d'autre part.

L'invention concerne également un équipement combiné comprenant des moyens de traitement permettant d'assurer la transmission des données entre un premier équipement informatique ou périphérique comprenant une interface de type Bluetooth configurée pour gérer des profils Bluetooth permettant des transferts de données de type audio et non-audio et un deuxième équipement informatique comprenant une interface de type Bluetooth configurée pour gérer des profils Bluetooth permettant des transferts de données de type audio uniquement, les données reçues dudit premier équipement informatique sur un canal non-audio (9) étant encodées en format audio afin d'être transmise sur un canal audio (5) vers ledit deuxième équipement informatique d'une part et les données de type non-audio encodées au format audio reçues dudit deuxième équipement informatique sur un canal audio (5) étant encodées en format non-audio afin d'être transmise sur un canal non-audio (9) vers ledit premier équipement informatique d'autre part.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:
- la figure 1 représente un schéma de la répartition des bandes de fréquence allouées aux données de type audio et non-audio;
- la figure 2 représente un schéma d'une connexion Bluetooth® entre un téléphone mobile et une oreillette;
- la figure 3 représente un schéma d'une tentative de connexion Bluetooth® entre un téléphone mobile et un lecteur de carte à puce;
- la figure 4 représente un schéma d'une connexion Bluetooth® entre un téléphone mobile et un lecteur de carte à puce par l'intermédiaire d'un canal audio;
- la figure 5 représente un schéma d'une double connexion Bluetooth® entre un téléphone mobile et une oreillette d'une part et entre un téléphone mobile et un lecteur de carte à puce par l'intermédiaire de l'oreillette d'autre part;
- la figure 6 représente une schéma d'utilisation d'un équipement combiné permettant une connexion Bluetooth® entre un téléphone mobile et des équipements ou périphériques d'autre part;

Dans la description qui va suivre, on désigne de façon générale:

Le terme « équipement informatique » correspond à un équipement électronique comprenant des moyens de traitement permettant la mise en oeuvre d'une communication par une interface Bluetooth®. L'équipement informatique étant l'équipement maître de la communication Bluetooth®.

Le terme « périphérique » correspond à un équipement électronique comprenant des moyens de traitement permettant d'établir une communication par une interface

Bluetooth® avec un équipement informatique. Le périphérique étant l'équipement esclave de la communication Bluetooth®.

Le terme « équipement combiné » correspond à un équipement électronique comprenant des moyens de traitement permettant la mise en oeuvre d'une communication par une interface Bluetooth® avec au moins un équipement informatique d'une part et avec au moins un périphérique d'autre part.

Les modes de réalisation de la présente invention visent à transmettre sur un canal Bluetooth® de type audio des données de type non-audio afin de permettre à un équipement informatique ne comportant uniquement qu'un ou des profils de gestion des données audio de communiquer des données de type non-audio avec un périphérique configuré pour recevoir des données de type non-audio (par l'intermédiaire de profils Bluetooth® dédiés, de connexions Universal Serial Bus (USB), série, Firewire ou autres permettant de communiquer avec d'autres périphériques).

Pour cela, les données de type non-audio sont encodées selon un format de type audio afin de permettre leur transmission sur un canal audio géré par un profil Bluetooth® correspondant à des données audio.

Par ailleurs, dans le cas d'une transmission simultanée de données audio et non-audio par un canal audio, la présence des données non-audio peut entraîner de forts désagréments pour le ou les utilisateurs. En effet, dans le cas où un équipement informatique tel qu'un téléphone portable aurait un périphérique tel qu'une oreillette, la transmission sur le canal audio de données non-audio pourrait provoquer l'émission de bruits désagréables voir nocifs pour l'oreille de l'utilisateur.

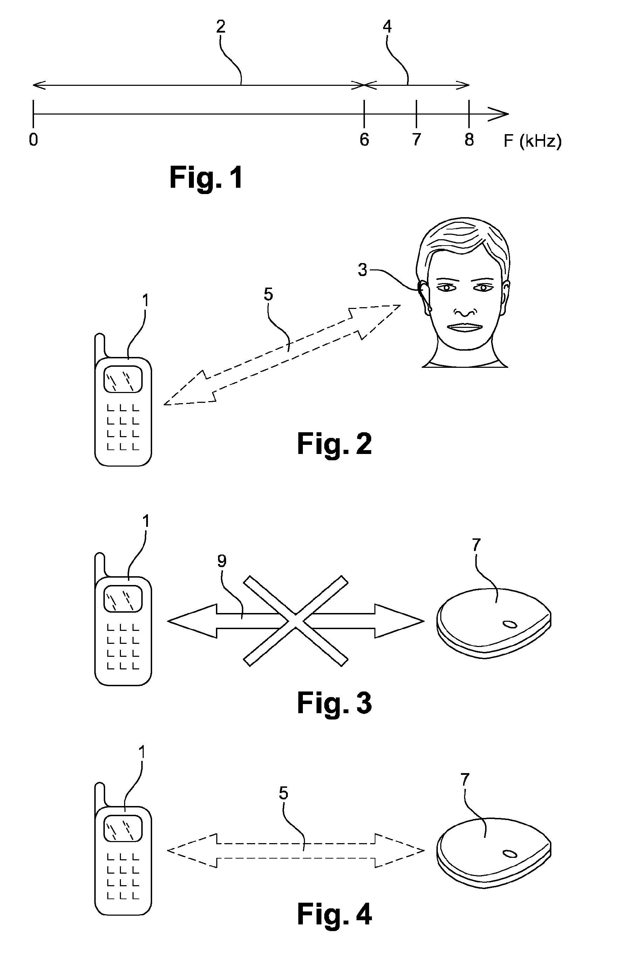

Afin de surmonter ce problème, selon un mode de réalisation de la présente invention, les données de type non-audio sont transmises sur des bandes de fréquences différentes des données de type audio à l'intérieur du canal audio de manière a séparer les données de type audio des données de type non-audio lors de la réception du signal. La figure 1 représente un exemple de répartition des bandes de fréquence au niveau du canal audio. En considérant que ce canal couvre un spectre de 50 Hz à 8 kHz, la bande 50Hz-6kHz 2 est réservée aux signaux de type audio et la bande 6kHz-8kHz 4 est réservée aux signaux de type non-audio. Pour cela, une porteuse située à 7kHz est modulée par les signaux de type non-audio. De plus, l'amplitude du signal modulé obtenu est limitée (par exemple à 10 ou 20% de l'amplitude des signaux de type audio) afin que le bruit produit par ces signaux correspondant aux données de type non-audio reste faible.

Selon un autre mode de réalisation, l'encodage des données non-audio est réalisé par une modulation en large spectre permettant de distribuer le son produit par la transmission de ces données sur un ensemble de fréquences ayant des niveaux faibles (création d'un bruit blanc de faible intensité), de sorte que le son produit (équivalent à un léger souffle) ne perturbe pas le ou les utilisateurs du périphérique audio (oreillette, écouteurs, haut-parleurs...).

Selon un mode de réalisation alternatif, l'encodage des données non-audio est réalisé par une technique de watermarking audio, ce qui les rend quasiment inaudible, c'est-à-dire difficilement perceptible par l'utilisateur. Néanmoins, il est à noter qu'un léger bruit peut être toléré de manière à augmenter la quantité de données non-audio pouvant être transmises en utilisant cette technique.

De manière alternative, l'encodage des données non-audio est réalisé de manière à produire un son à des fréquences inaudibles pour le ou les utilisateurs du périphérique audio.

Afin de mieux comprendre l'invention, différentes configurations de la présente invention vont maintenant être décrits à partir d'exemples de réalisation.

Dans le cas de téléphones mobiles ou téléphones mobiles intelligents (« smartphones » en anglais), une interface Bluetooth est généralement disponible pour permettre l'utilisation d'un périphérique audio tel qu'une oreillette. Ainsi, comme représenté sur la figure 2, le téléphone mobile intelligent 1 peut communiquer avec une oreillette 3 par l'intermédiaire d'un canal Bluetooth audio 5, la connexion étant gérée par un profil Bluetooth dédié comme par exemple les profils « Hands Free (HFP) », « Headset (HSP) » ou « Advanced Audio Distribution (A2DP) » qui permettent un encodage et une transmission des données audio entre le téléphone mobile intelligent 1 et l'oreillette 3.

Néanmoins, si le téléphone mobile intelligent ne comporte pas de lecteur de carte à puces comme c'est souvent le cas, l'utilisateur de ce téléphone mobile intelligent peut désirer se connecter à un lecteur de carte à puces, ce qui n'est pas non plus possible par l'intermédiaire de son connecteur de bus de série universel (« Universal Serial Bus (USB) » en anglais), lorqu'il y en a un, puisque le lecteur de carte à puces n'est pas un équipement USB maître (« Host » en anglais).

Or, comme représenté sur la figure 3, le téléphone mobile intelligent ne peut communiquer avec le lecteur de carte à puce 7 par l'intermédiaire d'un canal de transfert de données non-audio 9 si le téléphone mobile intelligent 1 ne comprend pas de profil Bluetooth gérant ce type de données tel que le profil serial-port (SPP). Ainsi, l'absence de profil Bluetooth adapté empêche l'échange de données entre le téléphone mobile intelligent 1 et le lecteur de carte à puces 7.

Afin de surmonter ce problème, les modes de réalisation de la présente invention transmettent les données de type non-audio sur le canal audio 5 afin que ces données puissent être gérées par le profil Bluetooth du téléphone mobile intelligent 1 comme représenté sur la figure 4. Les données non-audio sont donc encodées sous un format audio puis transmises par le canal audio 5 entre le téléphone mobile intelligent 1 et le lecteur de carte à puces 7.

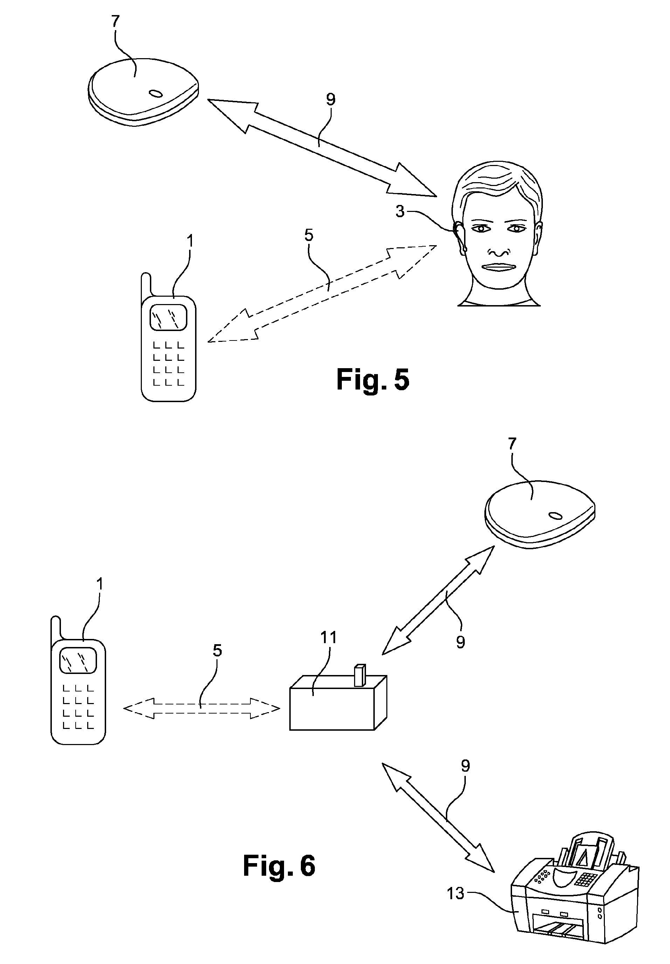

Selon un autre mode de réalisation présenté sur la figure 5, le canal audio permet le transfert de données de type audio et non-audio à la fois. Dans le présent exemple, les données de type audio sont destinées à l'utilisateur de l'oreillette 3 et sont transmises par le canal audio 5 alors que les données de type non-audio sont destinées à un lecteur de carte à puces mais transitent également par l'oreillette 3 en empruntant le canal audio 5 entre le téléphone mobile intelligent 1 et l'oreillette 3 puis par un canal non-audio entre l'oreillette 3 et le lecteur de carte à puces 7, l'oreillette 3 servant alors de passerelle entre le téléphone mobile intelligent 1 et le lecteur de carte à puces 7. Dans cette configuration, les données de type non-audio transmises par le canal audio doivent être encodées de manière à éviter de perturber le fonctionnement de l'oreillette comme décrit précédemment.

Selon un autre mode de réalisation présenté sur la figure 6, un équipement combiné 11 comprenant d'une part une interface Bluetooth® configurée pour échanger des données de type audio avec un téléphone mobile intelligent 1 et d'autre part une interface Bluetooth® configurée pour échanger des données de type non-audio avec des périphériques ou équipements informatiques (par exemple, un lecteur de carte à puce 7 ou une imprimante 13) comprenant des interfaces Bluetooth® par l'intermédiaire d'un canal non-audio 9 et grâce à des profils Bluetooth® adéquats est utilisé comme passerelle entre le téléphone mobile intelligent et les autres équipements ou périphériques (comme l'oreillette dans le mode de réalisation précédent). Ainsi, l'équipement combiné 11 permet comme précédemment d'échanger des données de type non-audio entre un téléphone mobile intelligent 1 dont l'interface Bluetooth est configurée uniquement pour l'échange de données audio et des périphériques ou équipements informatiques comprenant des interfaces Bluetooth® configurés pour échanger des données de type non-audio.

Il est à noter que pour communiquer avec des périphériques et des équipements informatiques, l'équipement combiné doit comprendre une interface Bluetooth de type maître (« Host » en anglais) et une interface de type esclave (« device » en anglais). L'intérêt de l'équipement combiné étant pour l'utilisateur d'un téléphone mobile intelligent d'avoir un simple équipement pour lui permettre de communiquer avec tous les équipements ou périphériques standards.

Ainsi, les modes de réalisation de la présente invention permettent à un utilisateur d'un équipement informatique ne comprenant qu'un profil Bluetooth permettant de gérer un échange de données audio d'échanger d'autres types de données sur le canal audio sans modifier l'infrastructure matériel (« hardware » en anglais) de son équipement informatique et ainsi d'augmenter les possibilités de l'interface Bluetooth de son équipement informatique.

## Revendications

1. Procédé de gestion des transferts de données entre un périphérique comprenant une interface de type Bluetooth et un équipement informatique (1) comprenant une interface de type Bluetooth configurée pour gérer des profils Bluetooth permettant des transferts de données de type audio **caractérisé en ce que** l'échange de données numériques de type non-audio entre le périphérique et l'équipement informatique (1) est réalisé par encodage des données numériques en format audio et par transmission de ces données numériques par l'intermédiaire du canal audio (5) de l'interface Bluetooth.

2. Procédé de gestion des transferts de données selon la revendication 1 dans lequel les bits du signal correspondant à des données de type audio sont transmis sur au moins une première bande de fréquence et les bits du signal correspondant à des données de type non-audio sont transmis sur au moins une deuxième bande de fréquence.

3. Procédé de gestion des transferts de données selon la revendication 2 dans lequel les signaux transmis sur au moins une première bande de fréquence sont transmis avec une première amplitude et les signaux transmis sur au moins une deuxième bande de fréquence sont transmis avec une deuxième amplitude.

4. Procédé de gestion des transferts de données selon l'une des revendications précédentes dans lequel les profils Bluetooth permettant des transferts de type audio comprennent:
- le profil Hands Free (HFP),
- le profil Headset (HSP),
- le profil Advanced Audio Distribution (A2DP).

5. Procédé de gestion des transferts de données selon l'une des revendications précédentes dans lequel le périphérique est un lecteur de cartes à puces (7).

6. Equipement informatique comprenant une interface de type Bluetooth configurée pour gérer des profils Bluetooth permettant des transferts de données de type audio dans lequel ledit équipement informatique (1) comprend des moyens d'encodage et de décodage des données de type non-audio selon un format audio afin de permettre la transmission desdites données de type non-audio sur un canal audio (5).

7. Périphérique comprenant une interface de type Bluetooth configurée pour gérer des profils Bluetooth permettant des transferts de données de type audio et non-audio dans lequel ledit périphérique comprend des moyens d'encodage et de décodage des données de type non-audio sur un canal audio (5) de manière à permettre des échanges de données non-audio avec un équipement informatique possédant une interface de type Bluetooth configurée pour gérer des profils Bluetooth permettant des transferts de données de type audio uniquement.

8. Périphérique selon la revendication 7 comprenant des premiers moyens d'encodage et de décodage permettant d'échanger des données de type audio sur un canal audio (5) selon un premier type d'encodage et des deuxième moyens d'encodage et de décodage permettant d'échanger des données de type non-audio sur ledit canal audio (5) selon un deuxième type d'encodage.

9. Périphérique selon la revendication 7 ou 8 comprenant des moyens de traitement permettant d'assurer la transmission des données entre un premier équipement informatique comprenant une interface de type Bluetooth configurée pour gérer des profils Bluetooth permettant des transferts de données de type audio et non-audio et un deuxième équipement informatique comprenant une interface de type Bluetooth configurée pour gérer des profils Bluetooth permettant des transferts de données de type audio uniquement, les données reçues dudit premier équipement informatique sur un canal non-audio (9) étant encodées en format audio afin d'être transmise sur un canal audio (5) vers ledit deuxième équipement informatique d'une part et les données de type non-audio encodées au format audio reçues dudit deuxième équipement informatique sur un canal audio (5) étant encodées en format non-audio afin d'être transmise sur un canal non-audio (9) vers ledit premier équipement informatique d'autre part.

10. Equipement combiné comprenant des moyens de traitement permettant d'assurer la transmission des données entre un premier équipement informatique ou périphérique comprenant une interface de type Bluetooth configurée pour gérer des profils Bluetooth permettant des transferts de données de type audio et non-audio et un deuxième équipement informatique comprenant une interface de type Bluetooth configurée pour gérer des profils Bluetooth permettant des transferts de données de type audio uniquement, les données reçues dudit premier équipement informatique sur un canal non-audio (9) étant encodées en format audio afin d'être transmise sur un canal audio (5) vers ledit deuxième équipement informatique d'une part et les données de type non-audio encodées au format audio reçues dudit deuxième équipement informatique sur un canal audio (5) étant encodées en format non-audio afin d'être transmise sur un canal non-audio (9) vers ledit premier équipement informatique d'autre part.
